(19) Europäisches Patentamt

European Patent Office

Office européen des brevets

(11) **EP 0 700 772 A1**

(12) **EUROPÄISCHE PATENTANMELDUNG**

(43) Veröffentlichungstag:
**13.03.1996 Patentblatt 1996/11**

(51) Int. Cl.$^6$: **B29C 63/10**, B29C 47/16,
B29C 47/92

(21) Anmeldenummer: **95112001.3**

(22) Anmeldetag: **31.07.1995**

(84) Benannte Vertragsstaaten:
**DE ES FR IT**

(30) Priorität: **04.08.1994 DE 9412550 U**

(71) Anmelder: **Krupp Hoesch Tecna
Aktiengesellschaft
D-44145 Dortmund (DE)**

(72) Erfinder:
• **Wieting, Eugen, Dipl.-Ing.
D-59071 Hamm (DE)**
• **Feldmann, Klaus
D-59199 Bönen (DE)**

(54) **Rohrbeschichtungsanlage zum Aussenbeschichten von geschweissten Längsnahtrohren**

(57) Um eine Rohrbeschichtungsanlage zum Außenbeschichten von auf einem Rollgang gleichzeitig in Richtung der Rohrachse bewegten und sich um ihre Rohrachse drehenden Stahlrohren (2) gleichen Außendurchmessers mit einer Längsschweißnaht (6) über die Rohrlänge, wobei sich von Rohr zu Rohr ein Rohranfang und ein Rohrende in einem kurzen Abstand gegenüberstehen, mit einer Rohrheizstation, einer Epoxidharz-Beschichtungsstation, die jedes aufgeheizte Rohr mit einer gleichmäßig dicken Epoxidharzschicht (15) beschichtet, einer einen Wickelextruder (18) enthaltenden Haftvermittler-Beschichtungsstation, die jedes mit einer Epoxidharzschicht beschichtete Rohr mit einer Haftvermittlerschicht (16) auf jedem Rohrlängenbereich entsprechend einer Rohrbewegungssteigung schraubenförmig überlappt beschichtet, einer Polyethylen-Beschichtungsstation, die jedes mit je einer Epoxidharz- und Haftvermittlerschicht beschichtete Rohr mit mehreren Polyethylenschichten (23) in einem Längsnahtbereich dicker als in dem Rohrmantelbereich außerhalb des Längsnahtbereichs überlappt beschichtet, einer Trennstation, in der jedes in dem Abstand von Rohr zu Rohr entstandene Schlauchstück aus einer Haftvermittlerschicht und mehreren Polyethylenschichten getrennt wird, einer Polyethylen-Kühlstation, einer Schichtdickenmeßstation und einer Bearbeitungsstation, die an den beschichteten Rohren die Beschichtung in einem kurzen Rohranfangs- und Rohrendbereich abarbeitet, zu schaffen, die einen geringen Raumbedarf hat, besteht die Polyethylen-Beschichtungsstation (13) aus einem von zwei drehzahlregelbaren Motoren (21,22) angetriebenen Doppelextruder (20) und einer die Motoren (21,22) steuernden Schweißnahterkennungseinrichtung (19).

Fig. 2

**Beschreibung**

Die Erfindung bezieht sich auf eine Rohrbeschichtungsanlage zum Außenbeschichten von auf einem Rollgang gleichzeitig in Richtung der Rohrachse bewegten und sich um ihre Rohrachse drehenden Stahlrohren gleichen Außendurchmessers mit einer Längsschweißnaht über die Rohrlänge, wobei sich von Rohr zu Rohr ein Rohranfang und ein Rohrende in einem kurzen Abstand gegenüberstehen, mit einer Rohrheizstation, einer Epoxidharz-Beschichtungsstation, die jedes aufgeheizte Rohr mit einer gleichmäßig dicken Epoxidharzschicht beschichtet, einer einen Wickelextruder enthaltenden Haftvermittler-Beschichtungsstation, die jedes mit einer Epoxidharzschicht beschichtete Rohr mit einer Haftvermittlerschicht auf jeden Rohrlängenbereich entsprechend einer Rohrbewegungssteigung schraubenförmig überlappt beschichtet, einer Polyethylen-Beschichtungsstation, die jedes mit je einer Epoxidharz- und Haftvermittlerschicht beschichtete Rohr mit mehreren Polyethylenschichten in einem Längsnahtbereich dicker als in dem Rohrmantelbereich außerhalb des Längsnahtbereichs überlappt beschichtet, einer Trennstation, in der jedes in dem Abstand von Rohr zu Rohr entstandene Schlauchstück aus einer Haftvermittlerschicht und mehreren Polyethylenschichten getrennt wird, einer Polyethylen-Kühlstation, einer Schichtdickenmeßstation und einer Bearbeitungsstation, die an den beschichteten Rohren die Beschichtung in einem kurzen Rohranfangs- und Rohrendbereich abarbeitet.

Eine bekannte Rohrbeschichtungsanlage der vorgenannten Art hat eine Polyethylen-Beschichtungsstation mit einem Wickelextruder und einer Reckvorrichtung, die das Recken der aus dem Wickelextruder austretenden Polyethylenschicht ermöglicht.

Die Polyethylenbeschichtung der mit je einer Epoxidharz- und Haftvermittlerschicht beschichteten Rohre wird hier vorgenommen mit einer unterschiedlich dicken Polyethylenschicht, wobei diese in ungereckter und dicker Form auf einem Längsnahtbereich sowie in gereckter und dünner Form auf dem Rohrmantel außerhalb des Längsnahtbereichs zur Auflage kommt.

Dieser bekannten Polyethylen-Beschichtungsstation haftet der Nachteil an, daß ihr Raumbedarf verhältnismäßig groß ist.

Der Erfindung liegt die Aufgabe zugrunde, für eine eingangs genannte Rohrbeschichtungsanlage eine Polyethylen-Beschichtungsstation vorzuschlagen, deren Raumbedarf gering ist.

Erfindungsgemäß wird diese Aufgabe dadurch gelöst, daß die Polyethylen-Beschichtungsstation aus einem von zwei drehzahlregelbaren Motoren angetriebenen Doppelextruder und einer die Motoren steuernden Schweißnahterkennungseinrichtung besteht.

Nach einem weiteren Merkmal der Erfindung ist die Schweißnahterkennungseinrichtung mit zwei Laserabstandssensoren ausgeführt.

Die Laserabstandssensoren sind in Richtung der Rohrachse nebeneinander und in Rohrumfangsrichtung versetzt angeordnet.

Zweckmäßigerweise enthält der Doppelextruder der Polyethylen-Beschichtungsstation mindestens einen auf eine Düsenlippe einwirkenden Stößel.

Jeder Stößel ist über ein Federelement vorgespannt.

Jodes Federelement setzt sich aus mehreren Tellerfedern zusammen.

Im folgenden wird die Erfindung anhand einer Zeichnung, in der ein Ausführungsbeispiel schematisch dargestellt ist, näher beschrieben.

Es zeigt

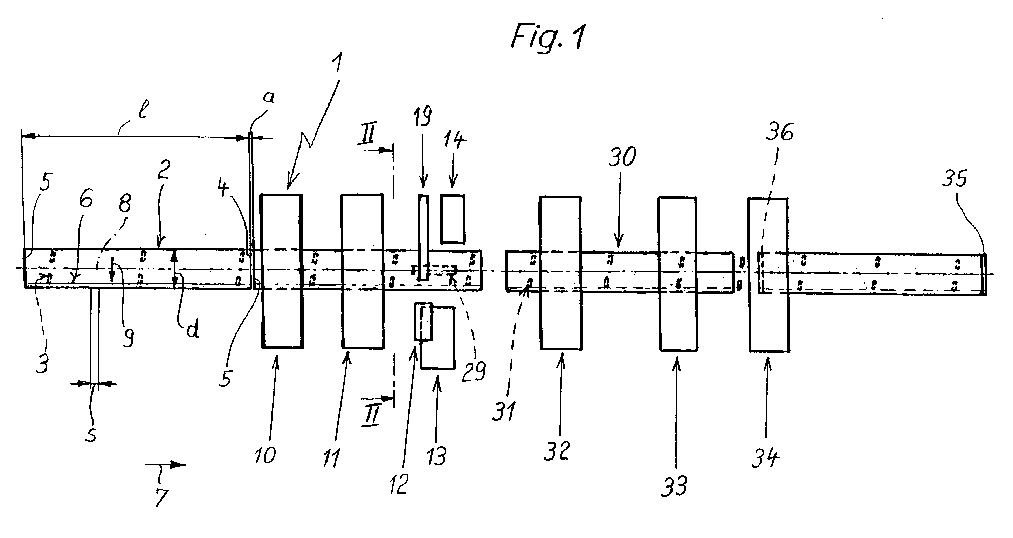

Fig. 1    eine Rohrbeschichtungsanlage mit den einzelnen Rohrbehandlungsstationen im Grundriß,

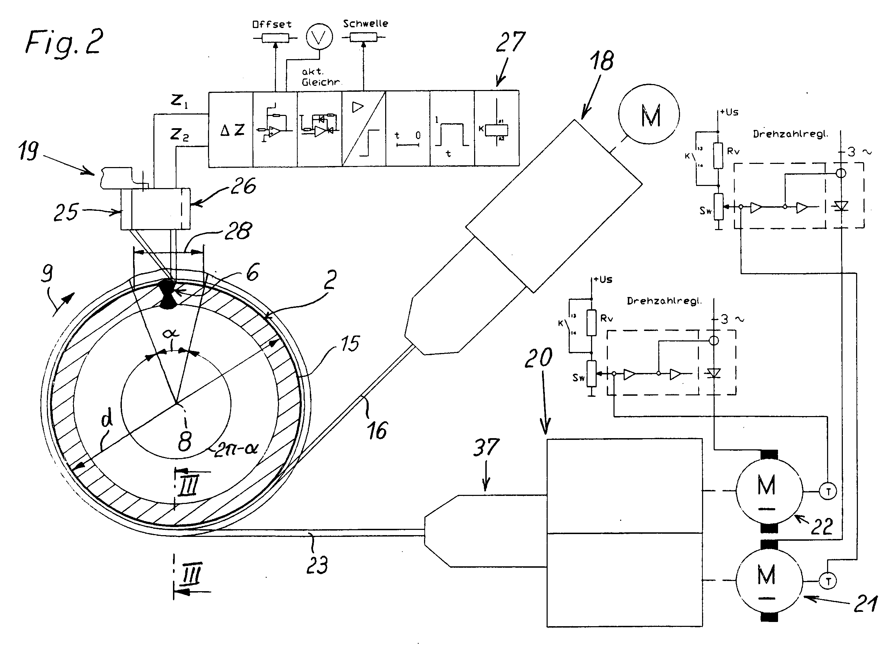

Fig. 2    einen Schnitt durch ein mit einer Epoxidharzschicht beschichtetes Stahlrohr entsprechend der Linie II - II in Fig. 1 in vergrößertem Maßstab mit einem Wickelextruder der Haftvermittler-Beschichtungsstation und einem Doppelextruder der Polyethylen-Beschichtungsstation in Ansicht,

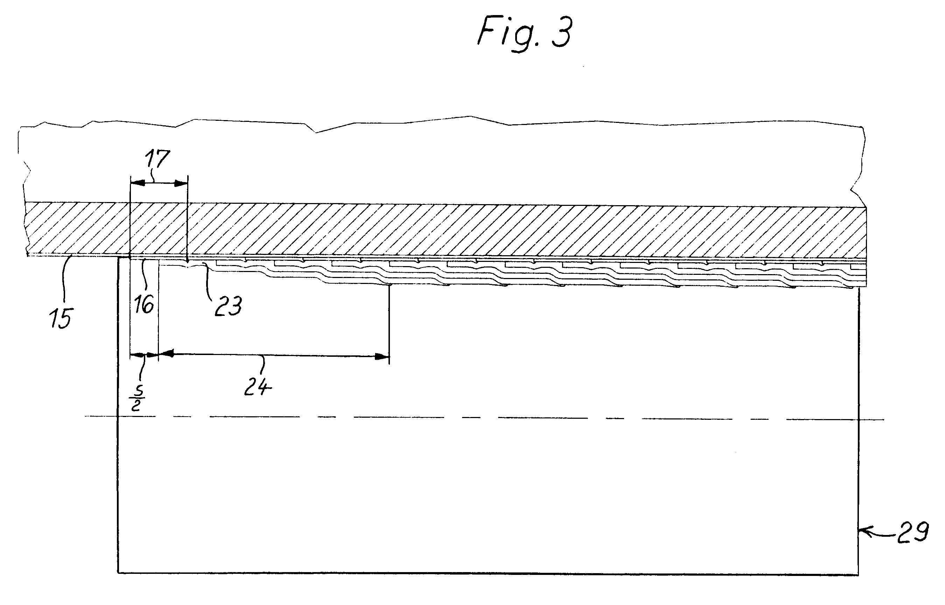

Fig. 3    einen Teilschnitt entsprechend der Linie III - III in Fig. 2 in vergrößerten Maßstab mit Ansicht einer Andrückrolle,

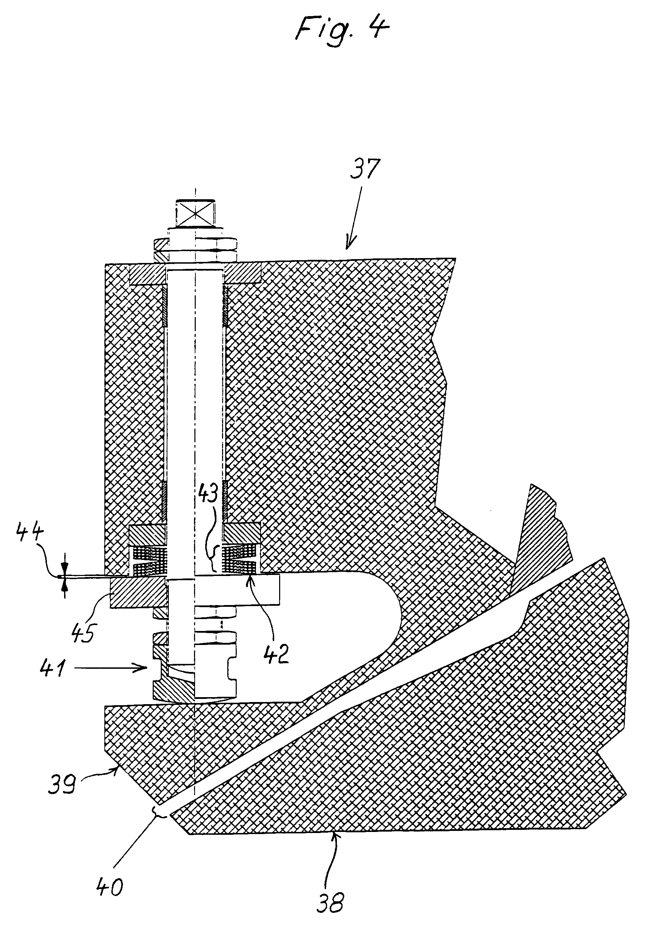

Fig. 4    einen Teilschnitt durch die Flachdüse des Doppelextruders der Polyethylen-Beschichtungsstation.

In einer Rohrbeschichtungsanlage 1 werden Rohre 2 aus Stahl gleichen Außendurchmessers d einem Rollgang 3 so zugeführt, daß sich von Rohr zu Rohr ein Rohranfang 4 und ein Rohrende 5 in einem kurzen Abstand a gegenüberstehen.

Der Abstand a von Rohr zu Rohr verhindert während der Rohrbeschichtung eine Rohrkollision und damit eine Beschädigung der Fasen an dem Rohranfang 4 und -ende 5.

Jedes Rohr 2 hat über die Rohrlänge 1 eine Längsschweißnaht 6, die mittels Lichtbogenschweißung hergestellt ist.

Der Rollgang 3 bewegt jedes Rohr 2 gleichzeitig in Richtung (Pfeil 7) der Rohrachse 8 und in Rohrumfangsrichtung (Pfeil 9) schraubenförmig mit einer Rohrbewegungssteigung s durch eine Rohrheizstation 10, eine Epoxidharz-Beschichtungsstation 11, eine Haftvermittler-Beschichtungsstation 12, eine Polyethylen-Beschichtungsstation 13 und eine Trennstation 14.

In der Epoxidharz-Beschichtungsstation 11 wird jedes aufgeheizte Rohr 2 außen mit einer gleichmäßig dicken Epoxidharzschicht 15 beschichtet.

Jedes mit einer Epoxidharzschicht 15 beschichtete Rohr 2 wird anschließend in der Haftvermittler-Beschichtungsstation 12 mit einer Haftvermittlerschicht 16 auf jedem Rohrlängenbereich 17 entsprechend der Rohrbewegungssteigung s schraubenförmig überlappt beschichtet. Die Haftvermittlerschicht 16 erzeugt ein Wickelextruder 18.

Die Polyethylen-Beschichtungsstation 13 weist einen von einer Schweißnahterkennungseinrichtung 19 steuerbaren Doppelextruder 20 auf. Angetrieben wird der Doppelextruder 20 von zwei drehzahlregelbaren Motoren 21, 22.

Der Doppelextruder 20 beschichtet schraubenförmig überlappt jedes vorher mit je einer Epoxidharz- (15) und Haftvermittlerschicht 16 beschichtete Rohr 2 mit einer unterschiedlich dicken Polyethylenschicht 23 auf einem Rohrlängenbereich 24 entsprechend der vierfachen Rohrbewegungssteigung s. Jeder Rohrlängenbereich 24 liegt gegenüber dem Rohrlängenbereich 17 um die halbe Rohrbewegungssteigung s versetzt.

Die Schweißnahterkennungseinrichtung 19 ist mit zwei Laserabstandssensoren 25, 26 ausgeführt, die in Richtung (Pfeil 7) der Rohrachse 8 nebeneinander und in Rohrumfangsrichtung (Pfeil 9) versetzt angeordnet sind.

Die Laserabstandssensoren 25, 26 tasten jedes mit der Epoxidharzschicht 15 beschichtete Rohr 2 ab und erlauben die Feststellung der Schweißnahterhöhung als Meßwert $\Delta z = z_1 - z_2$.

Ein zur Schweißnahterkennungseinrichtung 19 gehörender Meßwertverarbeitungsteil 27 bewirkt die Steuerung der drehzahlregelbaren Motoren 21, 22 in der Weise, daß die Polyethylenschicht 23 für einen Längsnahtbereich 28 in einem Rohrwinkel

$$\alpha = \frac{\text{Bogenlänge des Längsnahtbereichs 28}}{\text{Rohrumfang (Außendurchmesser d} \times \pi)} \times 2\pi$$

dicker ist als in dem Rohrwinkelbereich $2\pi - \alpha$.

Eine Andrückrolle 29 ist der Haftvermittler- (12) und der Polyethylen-Beschichtungsstation 13 zugeordnet, die die Haftvermittlerschicht 16 und die Polyethylenschichten 23 gegen jedes mit der Epoxidharzschicht 15 beschichtete Rohr 2 drückt.

Der Abstand a zwischen zwei Rohren 2 erfährt während der Rohrbeschichtung eine Überbrückung in Form eines Schlauchstücks (nicht dargestellt) aus einer Haftvermittlerschicht 16 und vier Polyethylenschichten 23. Die vier Polyethylenschichten 23 ergeben sich aus der Beschichtung auf einem Rohrlängenbereich 24 entsprechend der vierfachen Rohrbewegungssteigung s.

Jedes Schlauchstück wird in der Trennstation 14 rechtwinklig zur Rohrachse 8 durchgetrennt.

Nach der Trennung eines jeden Schlauchstücks ist praktisch ein Verbundrohr 30 aus einen Rohr 2, je einer Epoxidharz- (15) und Haftvermittlerschicht 16 sowie vier Polyethylenschichten 23 gegeben.

Jedes Verbundrohr 30 wird schließlich auf einen Rollgang 31 nacheinander durch eine Polyethylen-Kühlstation 32, eine Schichtdickenmeßstation 33 und eine Bearbeitungsstation 34 bewegt.

Die Bearbeitungsstation 34 arbeitet an jedem Verbundrohr 30 die Beschichtung in einem kurzen Rohranfangs- (35) und Rohrendbereich 36 ab.

Der Doppelextruder 20 der Polyethylen-Beschichtungsstation 13 hat ein Flachdüse 37 mit einer unteren (38) und einer oberen Düsenlippe 39.

Beide Düsenlippen 38, 39 sind so elastisch ausgebildet, daß die Polyethylenschicht 23 bei hoher Drehzahl der drehzahlregelbaren Motoren 21, 22 dicker aus der Düsenöffnung 40 austritt als bei niedriger Drehzahl der Motoren 21, 22.

Zur Begrenzung der Düsenöffnung 40 wirken auf die obere Düsenlippe 39 mehrere Stößel 41, von denen jeder über ein Federelement 42 vorgespannt ist.

Jedes Federelement 42 besteht aus acht Tellerfedern 43, deren Federhub 44 durch eine einstellbare Scheibe 45 begrenzt wird.

**Patentansprüche**

1.  Rohrbeschichtungsanlage zum Außenbeschichten von auf einem Rollgang gleichzeitig in Richtung der Rohrachse bewegten und sich um ihre Rohrachse drehenden Stahlrohren gleichen Außendurchmessers mit einer Längsschweißnaht über die Rohrlänge, wobei sich von Rohr zu Rohr ein Rohranfang und ein Rohrende in einem kurzen Abstand gegenüberstehen, mit einer Rohrheizstation, einer Epoxidharz-Beschichtungsstation, die jedes aufgeheizte Rohr mit einer gleichmäßig dicken Epoxidharzschicht beschichtet, einer einen Wickelextruder enthaltenden Haftvermittler-Bescrichtungsstation, die jedes mit einer Epoxidharzschicht beschichtete Rohr mit einer Haftvermittlerschicht auf jedem Rohrlängenbereich entsprechend einer Rohrbewegungssteigung schraubenförmig überlappt beschichtet, einer Polyethylen-Beschichtungsstation, die jedes mit je einer Epoxidharz- und Haftvermittlerschicht beschichtete Rohr mit mehreren Polyethylenschichten in einem Längsnahtbereich dicker als in dem Rohrmantelbereich außerhalb des Längsnahtbereichs überlappt beschichtet, einer Trennstation, in der jedes in dem Abstand von Rohr zu Rohr entstandene Schlauchstück aus einer Haftvermittlerschicht und mehreren Polyethylenschichten getrennt wird, einer Polyethylen-Kühlstation, einer Schichtdickenmeßstation und einer Bearbeitungsstation, die an den beschichteten Rohren die Beschichtung in einem kurzen Rohranfangs- und Rohrendbereich abarbeitet, dadurch gekennzeichnet, daß die Polyethylen-Beschichtungsstation (13) aus einem von zwei drehzahlregelbaren Motoren (21, 22) angetriebenen Doppelextruder (20) und einer die Motoren (21, 22) steuernden Schweißnahterkennungseinrichtung (19) besteht.

2. Rohrbeschichtungsanlage nach Anspruch 1, dadurch gekennzeichnet, daß die Schweißnahterkennungseinrichtung (19) mit zwei Laserabstandssensoren (25, 26) ausgeführt ist.

3. Rohrbeschichtungsanlage nach den Ansprüchen 1 und 2, dadurch gekennzeichnet, daß die Laserabstandssensoren (25, 26) in Richtung (Pfeil 7) der Rohrachse (8) nebeneinander und in Rohrumfangsrichtung (Pfeil 9) versetzt angeordnet sind.

4. Rohrbeschichtungsanlage nach Anspruch 1, dadurch gekennzeichnet, daß der Doppelextruder (20) der Polyethylen-Beschichtungsstation (13) mindestens einen auf eine Düsenlippe (38, 39) einwirkenden Stößel (41) enthält.

5. Rohrbeschichtungsanlage nach Anspruch 4, dadurch gekennzeichnet, daß jeder Stößel (41) über ein Federelement (42) vorgespannt ist.

6. Rohrbeschichtungsanlage nach Anspruch 5, dadurch gekennzeichnet, daß das Federelement (42) aus mehreren Tellerfedern (43) zusammengesetzt ist.

Fig.1

EP 0 700 772 A1

Fig.2

Fig. 3

EP 0 700 772 A1

## Fig. 4

**Europäisches Patentamt**

# EUROPÄISCHER RECHERCHENBERICHT

Nummer der Anmeldung

EP 95 11 2001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN vol. 006 no. 232 (M-172) ,18.November 1982 & JP-A-57 133026 (KAWASAKI SEITETSU KK) 17.August 1982, * Zusammenfassung * --- | 1-4 | B29C63/10 B29C47/16 B29C47/92 |
| X | DE-A-29 46 428 (MANNESMANN AG) 21.Mai 1981 * Ansprüche 1,4 * * Seite 7, Zeile 1 - Zeile 5 * --- | 1-4 | |
| A | EP-A-0 456 440 (KENDALL & CO) 13.November 1991 * Spalte 2, Zeile 39 - Zeile 46 * --- | 2,3 | |
| A | PATENT ABSTRACTS OF JAPAN vol. 005 no. 143 (M-087) ,9.September 1981 & JP-A-56 075827 (NIPPON STEEL CORP) 23.Juni 1981, * Zusammenfassung * --- | 1 | |
| A | US-A-4 008 036 (VERLINDEN VICTOR CLEMENT ET AL) 15.Februar 1977 * Abbildung 1 * --- | 4-6 | RECHERCHIERTE SACHGEBIETE (Int.Cl.6) B29C |
| A | DE-A-14 79 931 (ALLIED CHEMICAL CORP.) 14.Mai 1969 * Abbildung 5 * ----- | 4 | |

Der vorliegende Recherchenbericht wurde für alle Patentansprüche erstellt

| Recherchenort | Abschlußdatum der Recherche | Prüfer |
|---|---|---|
| DEN HAAG | 20.November 1995 | Lanaspeze, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)